# EUROPEAN PATENT APPLICATION

(11) **EP 4 687 047 A1**
(43) Date of publication of application: **04.02.2026**
(21) Application number: 25192968.3
(22) Date of filing: 30.07.2025
(51) Int. Cl.: G06F 16/2453, G06F 16/2455

(54) **DATABASE CACHING BASED ON QUERY WORKLOAD**

(30) Priority: 31.07.2024 IN 202441058042; 12.09.2024 US 202418883586
(71) Applicant: Nutanix, Inc., San Jose, California 95110 (US)
(72) Inventor: PATIL, Anand, San Jose, 95110 (US); REDDY, Chitti Ankith, San Jose, 95110 (US); BHATIA, Sumit, San Jose, 95110 (US); SHEKHAWAT, Devendra Singh, San Jose, 95110 (US); RAI, Aryan, San Jose, 95110 (US); KOMATINENI, Pradhyumna, San Jose, 95110 (US)
(74) Representative: Mathys & Squire

(57) **Abstract**

Techniques for caching data in a database system include one or more non-transitory computer-readable media storing program instructions that, when executed, perform the method of receiving a request to access a database, determining a caching priority specified in the request, processing the request to generate query results, and after generating the query results, caching or not caching data from which the query results are generated based on the determined caching priority.

## Description

### CROSS-REFERENCE TO RELATED APPLICATIONS

This application claims priority benefit of United States Patent Application titled DATABASE CACHING BASED ON QUERY WORKLOAD," filed September 12, 2024, and having Application No. 18/883,586, and the priority benefit of the Indian Provisional Patent Application titled, "DATABASE CACHING BASED ON QUERY WORKLOAD," filed on July 31, 2024, and having Application No. 202441058042. The subject matter of these related applications is hereby incorporated herein by reference.

### BACKGROUND

### Field of the Various Embodiments

Embodiments of the present invention relate generally to database management technologies, and more specifically, database caching based on query workload.

### Description of the Related Art

In database systems, it is common to cache the results of queries that are submitted to the database or data from which query results are generated in a cache. When a query is submitted by a user and query results retrieved by the database, the query results or data from which query results are generated are often cached. By caching required raw data from disk or computed data utilized to serve queries, an assumption is made that the query results could be needed in the near future by a subsequent query. By caching query results or data from which query results are generated, database performance is often improved because the database cache is typically implemented using hardware and/or data structures from which data retrieval is faster than retrieving the results from the database. Some database systems also perform proactive caching of data by caching data that is newer or recently updated. However, the size of a database cache is typically limited and smaller than the overall database storage that houses all data stored therein.

In general, a database has two primary types of workloads that submit queries: end-user workloads and analytical workloads. End-user workloads typically require low query latency but also submit fewer queries to the database. In many scenarios, end-user workloads are also more likely to query newer or recently updated data that is stored in the database. Analytical workloads typically do not require low query latency, because they are more likely to be running background analytics operations on data stored in the database. However, analytical workloads are more likely to require a large amount of data from the database. Additionally, analytical workloads are more likely to submit queries to the database more often or in the form of periodic jobs to the database. Moreover, analytical workloads typically query data associated with a longer time range that can be older or less frequently accessed data than the data accessed by end-user workloads.

In typical database systems, analytical workloads can cause cache pollution of database caches. In other words, the database cache becomes polluted with query results that are retrieved because of queries submitted by analytical workloads. Because, analytical workloads typically submit queries which trigger processing on much higher volume of data, required raw data from disk or computed data to serve queries that is cached by the database in response to end-user workloads are pushed out of the cache by query results generated in response to analytical workloads. As a result, queries submitted by end-user queries, which could otherwise be serviced by cached data, result in cache misses so that the query results are retrieved from database storage, resulting in wasted processing resources and slower query response times to resolve the cache misses.

One solution for cache pollution caused by analytical workloads is to replicate a database so that analytical workloads operate on the replicated database rather than the database of record. However, utilizing a replicated database can result in analytical workloads accessing an inaccurate or out-of-date copy of the database.

As the foregoing indicates, a need exists in the art for methods and systems that provide for optimized database caching techniques.

### SUMMARY

The disclosed embodiments describe techniques for caching data in a database system that include receiving a request to access a database, determining a caching priority specified in the request, processing the request to generate query results; and after generating the query results, caching or not caching data from which the query results are generated based on the determined caching priority.

In various embodiments, one or more non-transitory computer-readable media storing program instructions that, when executed by one or more processors, cause the one or more processors to perform a method comprising receiving a request to access a database, determining a caching priority specified in the request, processing the request to generate query results; and after generating the query results, caching or not caching the query results based on the determined caching priority.

Further embodiments provide, among other things, methods and systems for implementing one or more aspects of the disclosed techniques.

At least one technical advantage of the disclosed techniques relative to the prior art is that, with the disclosed techniques, the likelihood that end-user workloads receive the benefits of database caching is increased because of reduced cache pollution due to analytical workloads. By reducing cache pollution, database performance is improved because of reduced background cache cleanup processing and unnecessary cache additions, which results in better latencies and less CPU consumption. Additionally, the disclosed techniques result in an improved cache hit ratio for end-user workloads, which results in lower latency for end-user workloads and fewer wasted processing resources allocated to resolving cache misses. Furthermore, by allowing analytical workloads to operate on the same copy of the database as end-user workloads, analytical workloads are permitted to operate on the database of record rather than a potentially inaccurate replicated database. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIGs. 1A-1D are block diagrams illustrating virtualization system architectures configured to implement one or more aspects of the present embodiments; and
FIG. 2 is a block diagram illustrating a networked environment in which one or more aspects of the present embodiments are implemented.
FIG. 3 is a block diagram illustrating a scenario in which an end-user workload submits a query to a database system according to one or more aspects of the present embodiments.
FIG. 4 is a block diagram illustrating a scenario in which an analytical workload submits a query to a database system according to one or more aspects of the present embodiments.
FIG. 5 is a flow diagram illustrating an example method of a database system returning query results in response to a query according to one or more aspects of the present embodiments.

### DETAILED DESCRIPTION

In the following description, various concepts and examples are disclosed that provide more effective techniques for accessing business data using executable code included in authorization identifiers. The numerous specific details set forth will provide artisans with a more thorough understanding of the various embodiments. However, it will be apparent to one skilled in the art that the inventive concepts can be practiced without one or more of these specific details.

### Exemplary Virtualization System Architectures

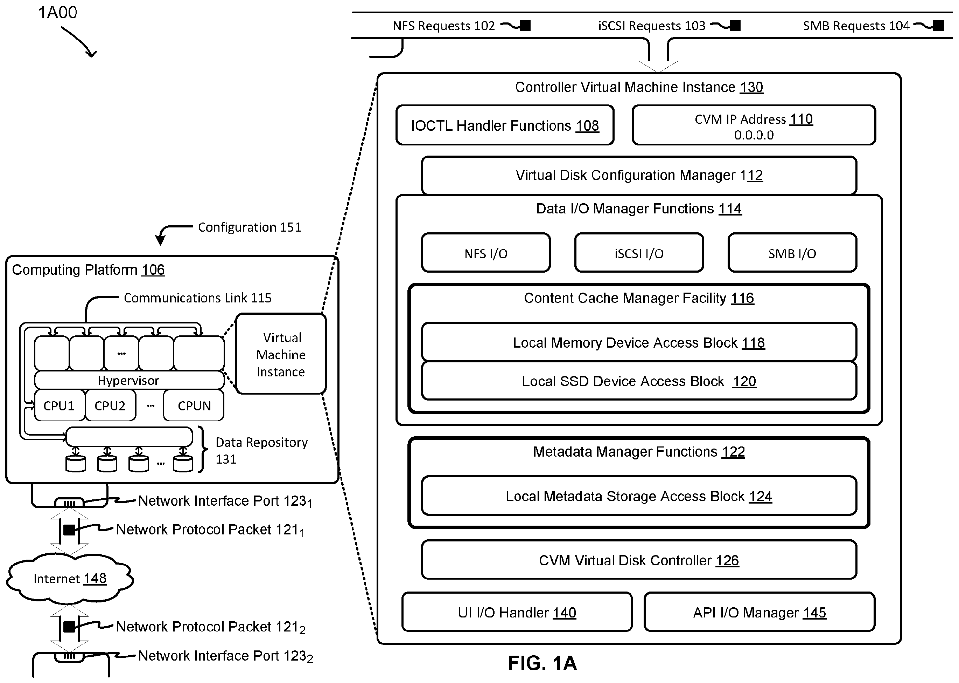

According to some embodiments, all or portions of any of the disclosed techniques can be partitioned into one or more modules and instances within, or as, or in conjunction with a virtualized controller in a virtual computing environment. Some example instances within various virtual computing environments are shown and discussed in further detail in FIGs. 1A-1D. Consistent with these embodiments, a virtualized controller includes a collection of software instructions that serve to abstract details of underlying hardware or software components from one or more higher-level processing entities. In some embodiments, a virtualized controller can be implemented as a virtual machine, as an executable container, or within a layer (e.g., such as a layer in a hypervisor). Consistent with these embodiments, distributed systems include collections of interconnected components that are designed for, or dedicated to, storage operations as well as being designed for, or dedicated to, computing and/or networking operations.

In some embodiments, interconnected components in a distributed system can operate cooperatively to achieve a particular objective such as to provide high-performance computing, high-performance networking capabilities, and/or high-performance storage and/or high-capacity storage capabilities. For example, a first set of components of a distributed computing system can coordinate to efficiently use a set of computational or compute resources, while a second set of components of the same distributed computing system can coordinate to efficiently use the same or a different set of data storage facilities.

In some embodiments, a hyperconverged system coordinates the efficient use of compute and storage resources by and between the components of the distributed system. Adding a hyperconverged unit to a hyperconverged system expands the system in multiple dimensions. As an example, adding a hyperconverged unit to a hyperconverged system can expand the system in the dimension of storage capacity while concurrently expanding the system in the dimension of computing capacity and also in the dimension of networking bandwidth. Components of any of the foregoing distributed systems can comprise physically and/or logically distributed autonomous entities.

In some embodiments, physical and/or logical collections of such autonomous entities can sometimes be referred to as nodes. In some hyperconverged systems, compute and storage resources can be integrated into a unit of a node. Multiple nodes can be interrelated into an array of nodes, which nodes can be grouped into physical groupings (e.g., arrays) and/or into logical groupings or topologies of nodes (e.g., spoke-and-wheel topologies, rings, etc.). Some hyperconverged systems implement certain aspects of virtualization. For example, in a hypervisor-assisted virtualization environment, certain of the autonomous entities of a distributed system can be implemented as virtual machines. As another example, in some virtualization environments, autonomous entities of a distributed system can be implemented as executable containers. In some systems and/or environments, hypervisor-assisted virtualization techniques and operating system virtualization techniques are combined.

FIG. 1A is a block diagram illustrating virtualization system architecture 1A00 configured to implement one or more aspects of the present embodiments. As shown in FIG. 1A, virtualization system architecture 1A00 includes a collection of interconnected components, including a controller virtual machine (CVM) instance 130 in a configuration 151. Configuration 151 includes a computing platform 106 that supports virtual machine instances that are deployed as user virtual machines, or controller virtual machines or both. Such virtual machines interface with a hypervisor (as shown). In some examples, virtual machines can include processing of storage I/O (input/output or IO) as received from any or every source within the computing platform. An example implementation of such a virtual machine that processes storage I/O is depicted as CVM instance 130.

In this and other configurations, a CVM instance receives block I/O storage requests as network file system (NFS) requests in the form of NFS requests 102, internet small computer storage interface (iSCSI) block IO requests in the form of iSCSI requests 103, Samba file system (SMB) requests in the form of SMB requests 104, and/or the like. The CVM instance publishes and responds to an internet protocol (IP) address (e.g., CVM IP address 110). Various forms of input and output can be handled by one or more IO control handler functions (e.g., IOCTL handler functions 108) that interface to other functions such as data IO manager functions 114 and/or metadata manager functions 122. As shown, the data IO manager functions can include communication with virtual disk configuration manager 112 and/or can include direct or indirect communication with any of various block IO functions (e.g., NFS IO, iSCSI IO, SMB IO, etc.).

In addition to block IO functions, configuration 151 supports IO of any form (e.g., block IO, streaming IO, packet-based IO, HTTP traffic, etc.) through either or both of a user interface (UI) handler such as UI IO handler 140 and/or through any of a range of application programming interfaces (APIs), possibly through API IO manager 145.

Communications link 115 can be configured to transmit (e.g., send, receive, signal, etc.) any type of communications packets comprising any organization of data items. The data items can comprise a payload data, a destination address (e.g., a destination IP address) and a source address (e.g., a source IP address), and can include various packet processing techniques (e.g., tunneling), encodings (e.g., encryption), formatting of bit fields into fixed-length blocks or into variable length fields used to populate the payload, and/or the like. In some cases, packet characteristics include a version identifier, a packet or payload length, a traffic class, a flow label, etc. In some cases, the payload comprises a data structure that is encoded and/or formatted to fit into byte or word boundaries of the packet.

In some embodiments, hard-wired circuitry can be used in place of, or in combination with, software instructions to implement aspects of the disclosure. Thus, embodiments of the disclosure are not limited to any specific combination of hardware circuitry and/or software. In embodiments, the term "logic" shall mean any combination of software or hardware that is used to implement all or part of the disclosure.

Computing platform 106 includes one or more computer readable media that is capable of providing instructions to a data processor for execution. In some examples, each of the computer readable media can take many forms including, but not limited to, non-volatile media and volatile media. Non-volatile media includes any non-volatile storage medium, for example, solid state storage devices (SSDs) or optical or magnetic disks such as hard disk drives (HDDs) or hybrid disk drives, or random-access persistent memories (RAPMs) or optical or magnetic media drives such as paper tape or magnetic tape drives. Volatile media includes dynamic memory such as random-access memory (RAM). As shown, controller virtual machine instance 130 includes content cache manager facility 116 that accesses storage locations, possibly including local dynamic random-access memory (DRAM) (e.g., through local memory device access block 118) and/or possibly including accesses to local solid-state storage (e.g., through local SSD device access block 120).

Common forms of computer readable media include any non-transitory computer readable medium, for example, floppy disk, flexible disk, hard disk, magnetic tape, or any other magnetic medium; CD-ROM or any other optical medium; punch cards, paper tape, or any other physical medium with patterns of holes; or any RAM, PROM, EPROM, FLASH-EPROM, or any other memory chip or cartridge. Any data can be stored, for example, in any form of data repository 131, which in turn can be formatted into any one or more storage areas, and which can comprise parameterized storage accessible by a key (e.g., a filename, a table name, a block address, an offset address, etc.). Data repository 131 can store any forms of data and can comprise a storage area dedicated to storage of metadata pertaining to the stored forms of data. In some cases, metadata can be divided into portions. Such portions and/or cache copies can be stored in the storage data repository and/or in a local storage area (e.g., in local DRAM areas and/or in local SSD areas). Such local storage can be accessed using functions provided by local metadata storage access block 124. The data repository 131 can be configured using CVM virtual disk controller 126, which can in turn manage any number or any configuration of virtual disks.

Execution of a sequence of instructions to practice certain of the disclosed embodiments is performed by one or more instances of a software instruction processor, or a processing element such as a data processor, or such as a central processing unit (e.g., CPU1, CPU2, ..., CPUN). According to certain embodiments of the disclosure, two or more instances of configuration 151 can be coupled by communications link 115 (e.g., backplane, LAN, PSTN, wired or wireless network, etc.) and each instance can perform respective portions of sequences of instructions as can be required to practice embodiments of the disclosure.

The shown computing platform 106 is interconnected to the Internet 148 through one or more network interface ports (e.g., network interface port 123₁ and network interface port 123₂). Configuration 151 can be addressed through one or more network interface ports using an IP address. Any operational element within computing platform 106 can perform sending and receiving operations using any of a range of network protocols, possibly including network protocols that send and receive packets (e.g., network protocol packet 121₁ and network protocol packet 121₂).

Computing platform 106 can transmit and receive messages that can be composed of configuration data and/or any other forms of data and/or instructions organized into a data structure (e.g., communications packets). In some cases, the data structure includes program instructions (e.g., application code) communicated through the Internet 148 and/or through any one or more instances of communications link 115. Received program instructions can be processed and/or executed by a CPU as it is received and/or program instructions can be stored in any volatile or non-volatile storage for later execution. Program instructions can be transmitted via an upload (e.g., an upload from an access device over the Internet 148 to computing platform 106). Further, program instructions and/or the results of executing program instructions can be delivered to a particular user via a download (e.g., a download from computing platform 106 over the Internet 148 to an access device).

Configuration 151 is merely one example configuration. Other configurations or partitions can include further data processors, and/or multiple communications interfaces, and/or multiple storage devices, etc. within a partition. For example, a partition can bound a multi-core processor (e.g., possibly including embedded or collocated memory), or a partition can bound a computing cluster having a plurality of computing elements, any of which computing elements are connected directly or indirectly to a communications link. A first partition can be configured to communicate to a second partition. A particular first partition and a particular second partition can be congruent (e.g., in a processing element array) or can be different (e.g., comprising disjoint sets of components).

A cluster is often embodied as a collection of computing nodes that can communicate between each other through a local area network (e.g., LAN or virtual LAN (VLAN)) or a backplane. Some clusters are characterized by assignment of a particular set of the aforementioned computing nodes to access a shared storage facility that is also configured to communicate over the local area network or backplane. In many cases, the physical bounds of a cluster are defined by a mechanical structure such as a cabinet or such as a chassis or rack that hosts a finite number of mounted-in computing units. A computing unit in a rack can take on a role as a server, or as a storage unit, or as a networking unit, or any combination therefrom. In some cases, a unit in a rack is dedicated to provisioning of power to other units. In some cases, a unit in a rack is dedicated to environmental conditioning functions such as filtering and movement of air through the rack and/or temperature control for the rack. Racks can be combined to form larger clusters. For example, the LAN of a first rack having a quantity of 32 computing nodes can be interfaced with the LAN of a second rack having 16 nodes to form a two-rack cluster of 48 nodes. The former two LANs can be configured as subnets, or can be configured as one VLAN. Multiple clusters can communicate between one module to another over a WAN (e.g., when geographically distal) or a LAN (e.g., when geographically proximal).

In some embodiments, a module can be implemented using any mix of any portions of memory and any extent of hard-wired circuitry including hard-wired circuitry embodied as a data processor. Some embodiments of a module include one or more special-purpose hardware components (e.g., power control, logic, sensors, transducers, etc.). A data processor can be organized to execute a processing entity that is configured to execute as a single process or configured to execute using multiple concurrent processes to perform work. A processing entity can be hardware-based (e.g., involving one or more cores) or software-based, and/or can be formed using a combination of hardware and software that implements logic, and/or can carry out computations and/or processing steps using one or more processes and/or one or more tasks and/or one or more threads or any combination thereof.

Some embodiments of a module include instructions that are stored in a memory for execution so as to facilitate operational and/or performance characteristics pertaining to management of block stores. Various implementations of the data repository comprise storage media organized to hold a series of records and/or data structures.

Further details regarding general approaches to managing data repositories are described in U.S. Patent No. 8,601,473 titled "ARCHITECTURE FOR MANAGING I/O AND STORAGE FOR A VIRTUALIZATION ENVIRONMENT," issued on December 3, 2013, which is hereby incorporated by reference in its entirety.

Further details regarding general approaches to managing and maintaining data in data repositories are described in U.S. Patent No. 8,549,518 titled "METHOD AND SYSTEM FOR IMPLEMENTING A MAINTENANCE SERVICE FOR MANAGING I/O AND STORAGE FOR A VIRTUALIZATION ENVIRONMENT," issued on October 1, 2013, which is hereby incorporated by reference in its entirety.

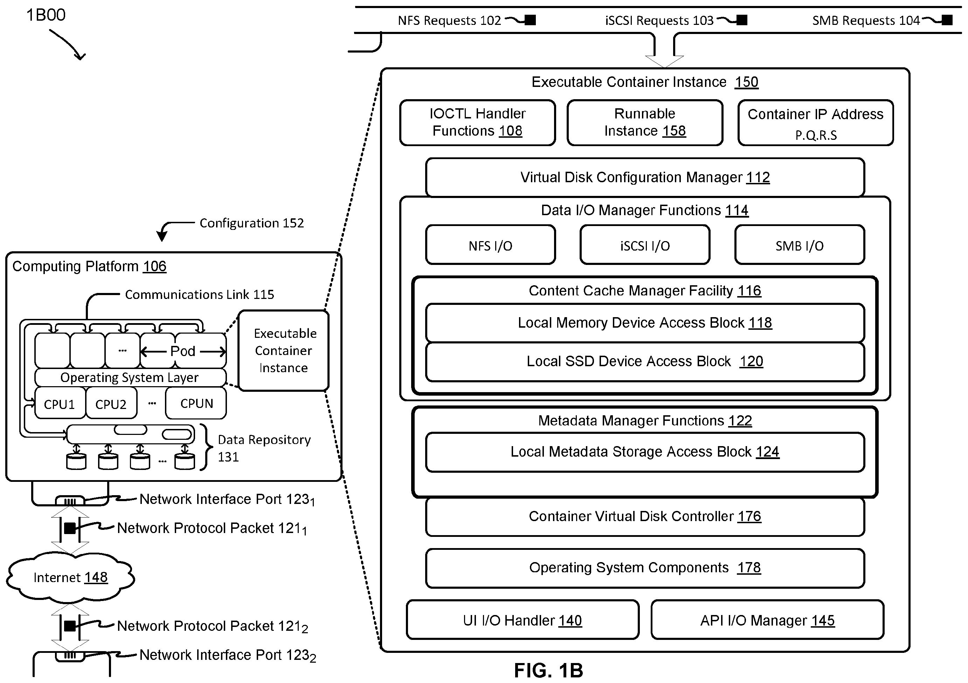

FIG. 1B depicts a block diagram illustrating another virtualization system architecture 1B00 configured to implement one or more aspects of the present embodiments. As shown in FIG. 1B, virtualization system architecture 1B00 includes a collection of interconnected components, including an executable container instance 150 in a configuration 152. Configuration 152 includes a computing platform 106 that supports an operating system layer (as shown) that performs addressing functions such as providing access to external requestors (e.g., user virtual machines or other processes) via an IP address (e.g., "P.Q.R.S", as shown). Providing access to external requestors can include implementing all or portions of a protocol specification (e.g., "http:") and possibly handling port-specific functions. In some embodiments, external requestors (e.g., user virtual machines or other processes) rely on the aforementioned addressing functions to access a virtualized controller for performing all data storage functions. Furthermore, when data input or output requests are received from a requestor running on a first node are received at the virtualized controller on that first node, then in the event that the requested data is located on a second node, the virtualized controller on the first node accesses the requested data by forwarding the request to the virtualized controller running at the second node. In some cases, a particular input or output request might be forwarded again (e.g., an additional or Nth time) to further nodes. As such, when responding to an input or output request, a first virtualized controller on the first node might communicate with a second virtualized controller on the second node, which second node has access to particular storage devices on the second node or, the virtualized controller on the first node can communicate directly with storage devices on the second node.

The operating system layer can perform port forwarding to any executable container (e.g., executable container instance 150). An executable container instance can be executed by a processor. Runnable portions of an executable container instance sometimes derive from an executable container image, which in turn might include all, or portions of any of, a Java archive repository (JAR) and/or its contents, and/or a script or scripts and/or a directory of scripts, and/or a virtual machine configuration, and can include any dependencies therefrom. In some cases, a configuration within an executable container might include an image comprising a minimum set of runnable code. Contents of larger libraries and/or code or data that would not be accessed during runtime of the executable container instance can be omitted from the larger library to form a smaller library composed of only the code or data that would be accessed during runtime of the executable container instance. In some cases, start-up time for an executable container instance can be much faster than start-up time for a virtual machine instance, at least inasmuch as the executable container image might be much smaller than a respective virtual machine instance. Furthermore, start-up time for an executable container instance can be much faster than start-up time for a virtual machine instance, at least inasmuch as the executable container image might have many fewer code and/or data initialization steps to perform than a respective virtual machine instance.

An executable container instance can serve as an instance of an application container or as a controller executable container. Any executable container of any sort can be rooted in a directory system and can be configured to be accessed by file system commands (e.g., "Is" or "Is -a", etc.). The executable container might optionally include operating system components 178, however such a separate set of operating system components need not be provided. As an alternative, an executable container can include runnable instance 158, which is built (e.g., through compilation and linking, or just-in-time compilation, etc.) to include all of the library and OS-like functions needed for execution of the runnable instance. In some cases, a runnable instance can be built with a virtual disk configuration manager, any of a variety of data IO management functions, etc. In some cases, a runnable instance includes code for, and access to, container virtual disk controller 176. Such a container virtual disk controller can perform any of the functions that the aforementioned CVM virtual disk controller 126 can perform, yet such a container virtual disk controller does not rely on a hypervisor or any particular operating system so as to perform its range of functions.

In some environments, multiple executable containers can be collocated and/or can share one or more contexts. For example, multiple executable containers that share access to a virtual disk can be assembled into a pod (e.g., a Kubernetes pod). Pods provide sharing mechanisms (e.g., when multiple executable containers are amalgamated into the scope of a pod) as well as isolation mechanisms (e.g., such that the namespace scope of one pod does not share the namespace scope of another pod).

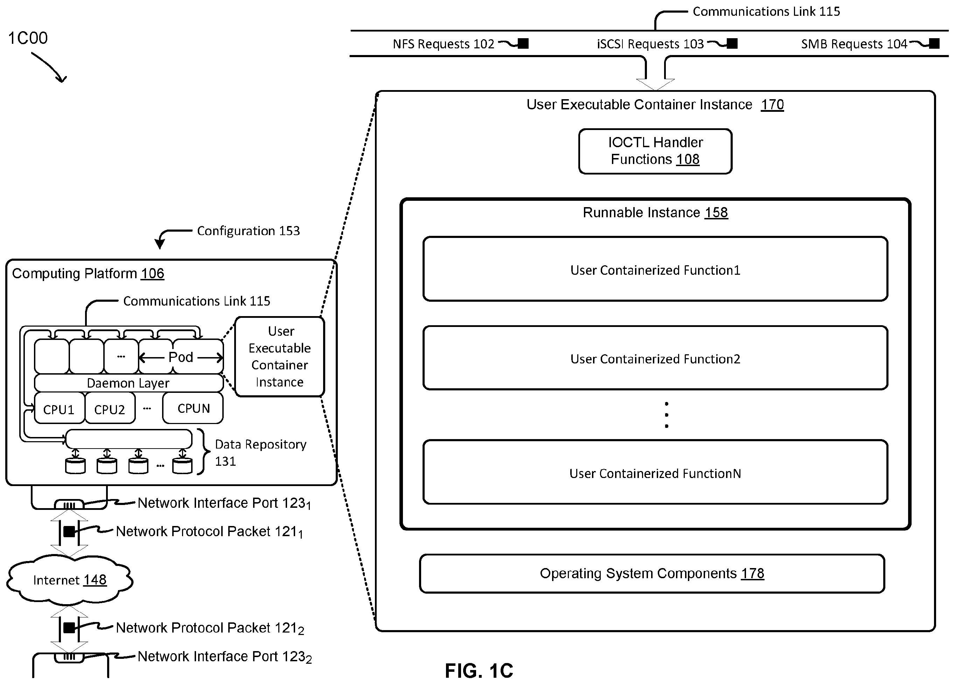

FIG. 1C is a block diagram illustrating virtualization system architecture 1C00 configured to implement one or more aspects of the present embodiments. As shown in FIG. 1C, virtualization system architecture 1C00 includes a collection of interconnected components, including a user executable container instance in configuration 153 that is further described as pertaining to user executable container instance 170. Configuration 153 includes a daemon layer (as shown) that performs certain functions of an operating system.

User executable container instance 170 comprises any number of user containerized functions (e.g., user containerized function1, user containerized function2, ..., user containerized functionN). Such user containerized functions can execute autonomously or can be interfaced with or wrapped in a runnable object to create a runnable instance (e.g., runnable instance 158). In some cases, the shown operating system components 178 comprise portions of an operating system, which portions are interfaced with or included in the runnable instance and/or any user containerized functions. In some embodiments of a daemon-assisted containerized architecture, computing platform 106 might or might not host operating system components other than operating system components 178. More specifically, the shown daemon might or might not host operating system components other than operating system components 178 of user executable container instance 170.

In some embodiments, the virtualization system architecture 1A00, 1B00, and/or 1C00 can be used in any combination to implement a distributed platform that contains multiple servers and/or nodes that manage multiple tiers of storage where the tiers of storage might be formed using the shown data repository 131 and/or any forms of network accessible storage. As such, the multiple tiers of storage can include storage that is accessible over communications link 115. Such network accessible storage can include cloud storage or networked storage (e.g., a SAN or storage area network). Unlike prior approaches, the disclosed embodiments permit local storage that is within or directly attached to the server or node to be managed as part of a storage pool. Such local storage can include any combinations of the aforementioned SSDs and/or HDDs and/or RAPMs and/or hybrid disk drives. The address spaces of a plurality of storage devices, including both local storage (e.g., using node-internal storage devices) and any forms of network-accessible storage, are collected to form a storage pool having a contiguous address space.

Significant performance advantages can be gained by allowing the virtualization system to access and utilize local (e.g., node-internal) storage. This is because I/O performance is typically much faster when performing access to local storage as compared to performing access to networked storage or cloud storage. This faster performance for locally attached storage can be increased even further by using certain types of optimized local storage devices such as SSDs or RAPMs, or hybrid HDDs, or other types of high-performance storage devices.

In some embodiments, each storage controller exports one or more block devices or NFS or iSCSI targets that appear as disks to user virtual machines or user executable containers. These disks are virtual since they are implemented by the software running inside the storage controllers. Thus, to the user virtual machines or user executable containers, the storage controllers appear to be exporting a clustered storage appliance that contains some disks. User data (including operating system components) in the user virtual machines resides on these virtual disks.

In some embodiments, any one or more of the aforementioned virtual disks can be structured from any one or more of the storage devices in the storage pool. In some embodiments, a virtual disk is a storage abstraction that is exposed by a controller virtual machine or container to be used by another virtual machine or container. In some embodiments, the virtual disk is exposed by operation of a storage protocol such as iSCSI or NFS or SMB. In some embodiments, a virtual disk is mountable. In some embodiments, a virtual disk is mounted as a virtual storage device.

In some embodiments, some or all of the servers or nodes run virtualization software. Such virtualization software might include a hypervisor (e.g., as shown in configuration 151) to manage the interactions between the underlying hardware and user virtual machines or containers that run client software.

Distinct from user virtual machines or user executable containers, a special controller virtual machine (e.g., as depicted by controller virtual machine instance 130) or as a special controller executable container is used to manage certain storage and I/O activities. Such a special controller virtual machine is sometimes referred to as a controller executable container, a service virtual machine (SVM), a service executable container, or a storage controller. In some embodiments, multiple storage controllers are hosted by multiple nodes. Such storage controllers coordinate within a computing system to form a computing cluster.

The storage controllers are not formed as part of specific implementations of hypervisors. Instead, the storage controllers run above hypervisors on the various nodes and work together to form a distributed system that manages all of the storage resources, including the locally attached storage, the networked storage, and the cloud storage. In example embodiments, the storage controllers run as special virtual machines-above the hypervisors-thus, the approach of using such special virtual machines can be used and implemented within any virtual machine architecture. Furthermore, the storage controllers can be used in conjunction with any hypervisor from any virtualization vendor and/or implemented using any combinations or variations of the aforementioned executable containers in conjunction with any host operating system components.

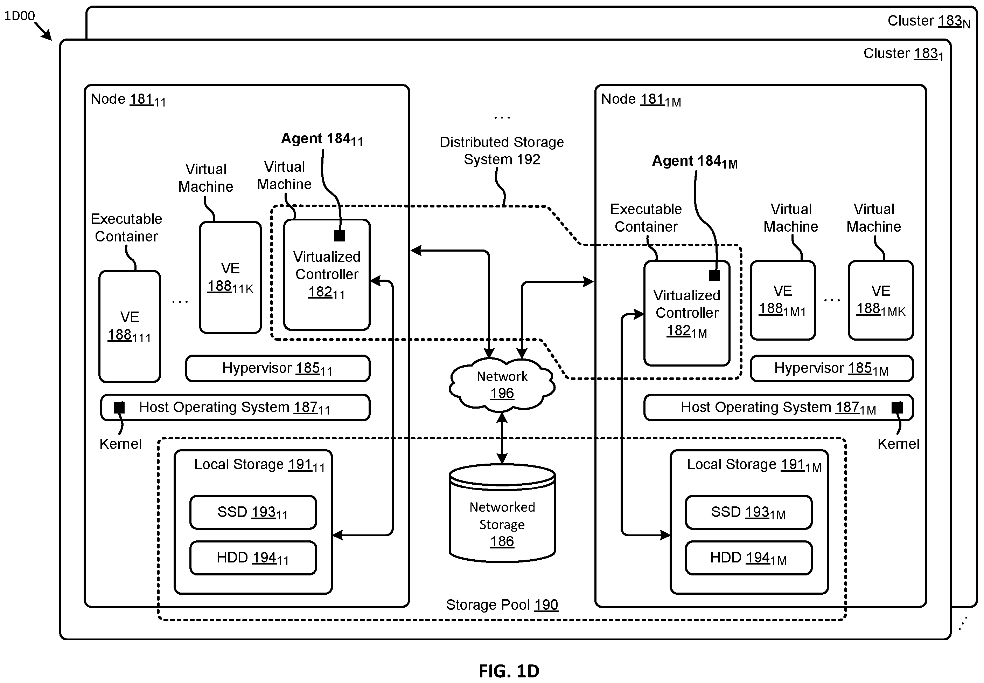

FIG. 1D is a block diagram illustrating virtualization system architecture 1D00 configured to implement one or more aspects of the present embodiments. As shown in FIG. 1D, virtualization system architecture 1D00 includes a distributed virtualization system that includes multiple clusters (e.g., cluster 183₁, ..., cluster 183_{N}) comprising multiple nodes that have multiple tiers of storage in a storage pool. Representative nodes (e.g., node 181₁₁, ..., node 181_{1M}) and storage pool 190 associated with cluster 183₁ are shown. Each node can be associated with one server, multiple servers, or portions of a server. The nodes can be associated (e.g., logically and/or physically) with the clusters. As shown, the multiple tiers of storage include storage that is accessible through a network 196, such as a networked storage 186 (e.g., a storage area network or SAN, network attached storage or NAS, etc.). The multiple tiers of storage further include instances of local storage (e.g., local storage 191₁₁, ..., local storage 191_{1M}). For example, the local storage can be within or directly attached to a server and/or appliance associated with the nodes. Such local storage can include solid state drives (SSD 193₁₁, ..., SSD 193_{1M}), hard disk drives (HDD 194₁₁, ..., HDD 194_{1M}), and/or other storage devices.

As shown, any of the nodes of the distributed virtualization system can implement one or more user virtualized entities (e.g., VE 188¹¹¹, ..., VE 188^{11K}, ..., VE 188^{1M1}, ..., VE 188^{1MK}), such as virtual machines (VMs) and/or executable containers. The VMs can be characterized as software-based computing "machines" implemented in a container-based or hypervisor-assisted virtualization environment that emulates the underlying hardware resources (e.g., CPU, memory, etc.) of the nodes. For example, multiple VMs can operate on one physical machine (e.g., node host computer) running a single host operating system (e.g., host operating system 187¹¹, ..., host operating system 187^{1M}), while the VMs run multiple applications on various respective guest operating systems. Such flexibility can be facilitated at least in part by a hypervisor (e.g., hypervisor 185¹¹, ..., hypervisor 185^{1M}), which hypervisor is logically located between the various guest operating systems of the VMs and the host operating system of the physical infrastructure (e.g., node).

As an alternative, executable containers can be implemented at the nodes in an operating system-based virtualization environment or in a containerized virtualization environment. The executable containers are implemented at the nodes in an operating system virtualization environment or container virtualization environment. The executable containers can include groups of processes and/or resources (e.g., memory, CPU, disk, etc.) that are isolated from the node host computer and other containers. Such executable containers directly interface with the kernel of the host operating system (e.g., host operating system 187₁₁, ..., host operating system 187_{1M}) without, in most cases, a hypervisor layer. This lightweight implementation can facilitate efficient distribution of certain software components, such as applications or services (e.g., micro-services). Any node of a distributed virtualization system can implement both a hypervisor-assisted virtualization environment and a container virtualization environment for various purposes. Also, any node of a distributed virtualization system can implement any one or more types of the foregoing virtualized controllers so as to facilitate access to storage pool 190 by the VMs and/or the executable containers.

Multiple instances of such virtualized controllers can coordinate within a cluster to form the distributed storage system 192 which can, among other operations, manage the storage pool 190. This architecture further facilitates efficient scaling in multiple dimensions (e.g., in a dimension of computing power, in a dimension of storage space, in a dimension of network bandwidth, etc.).

In some embodiments, a particularly configured instance of a virtual machine at a given node can be used as a virtualized controller in a hypervisor-assisted virtualization environment to manage storage and I/O (input/output or IO) activities of any number or form of virtualized entities. For example, the virtualized entities at node 181₁₁ can interface with a controller virtual machine (e.g., virtualized controller 18211) through hypervisor 185₁₁ to access data of storage pool 190. In such cases, the controller virtual machine is not formed as part of specific implementations of a given hypervisor. Instead, the controller virtual machine can run as a virtual machine above the hypervisor at the various node host computers. When the controller virtual machines run above the hypervisors, varying virtual machine architectures and/or hypervisors can operate with the distributed storage system 192. For example, a hypervisor at one node in the distributed storage system 192 might correspond to software from a first vendor, and a hypervisor at another node in the distributed storage system 192 might correspond to a second software vendor. As another virtualized controller implementation example, executable containers can be used to implement a virtualized controller (e.g., virtualized controller 182_{1M}) in an operating system virtualization environment at a given node. In this case, for example, the virtualized entities at node 181_{1M} can access the storage pool 190 by interfacing with a controller container (e.g., virtualized controller 182_{1M}) through hypervisor 185_{1M} and/or the kernel of host operating system 187_{1M}.

In some embodiments, one or more instances of an agent can be implemented in the distributed storage system 192 to facilitate the herein disclosed techniques. Specifically, agent 184₁₁, can be implemented in the virtualized controller 182₁₁, and agent 184_{1M} can be implemented in the virtualized controller 182_{1M}. Such instances of the virtualized controller can be implemented in any node in any cluster. Actions taken by one or more instances of the virtualized controller can apply to a node (or between nodes), and/or to a cluster (or between clusters), and/or between any resources or subsystems accessible by the virtualized controller or the agents.

### Exemplary Computing System

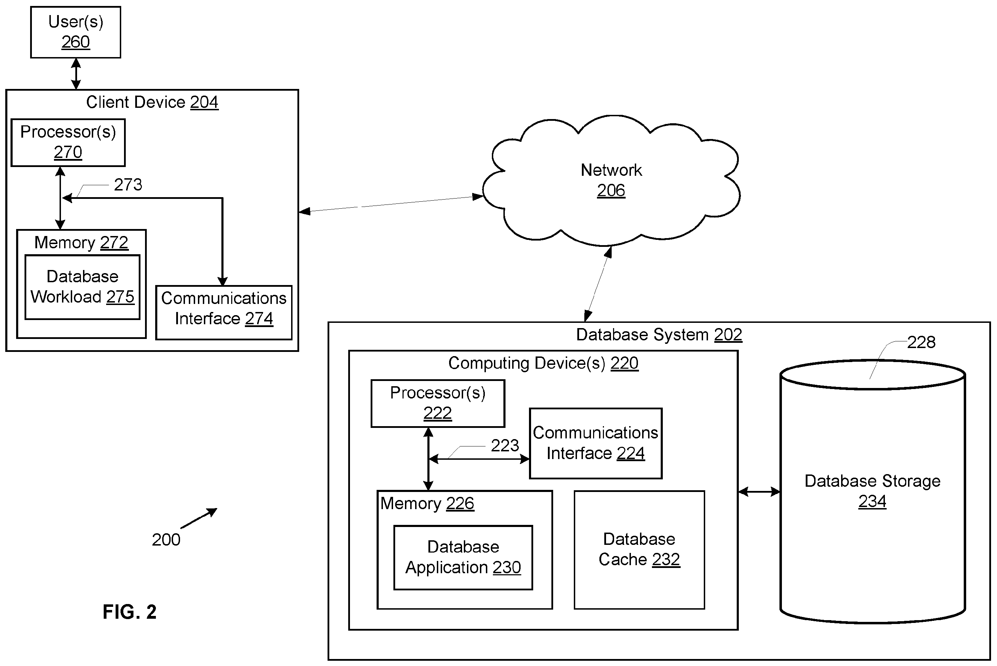

FIG. 2 is a block diagram illustrating a networked environment 200 in which one or more aspects of the present embodiments is implemented. As shown, networked environment 200 includes, without limitation, a database system 202, a client device 204, and a network 206. Database system 202 includes, without limitation, one or more computing devices 220 and storage 228. Each computing device 220 includes, without limitation, one or more processors 222, memory 226, a bus 223, a communications interface 224, and a database cache 232. Memory 226 stores, without limitation, a database application 230. Storage 228 includes, without limitation, database storage 234 that represents the data stored within a database. Database cache 232 represents a cache in which data retrieved from database storage 234 can be cached by database application 230. Additionally and/or alternatively database cache 232 can be stored in memory 226 or on another device. Client device 204 includes, without limitation, one or more processors 270, memory 272, a bus 273, and a communications interface 274. Memory 272 stores, without limitation, a database workload 275.

The database system 202 described herein is illustrative and any other technically feasible configurations fall within the scope of the present disclosure to provide one or more databases. For example, the database system 202 can be implemented in a computing cluster and implement databases of varying forms. In various embodiments, the databases provided by the database system 202 can be structured query language (SQL) and/or NoSQL databases.

Further, in the context of this disclosure, the computing elements shown in database system 202 can correspond to a physical computing system (e.g., a system in a data center) or can include a virtual computing instance. In various embodiments, database system 202 and/or the elements of database system 202 can be included in any of the virtualization system architectures shown in FIGs. 1A-1D.

Each of the one or more processors 222 and/or 270 can be any suitable processors implemented as a central processing unit (CPU), a graphics processing unit (GPU), an application-specific integrated circuit (ASIC), a field programmable gate array (FPGA), an artificial intelligence (AI) accelerator, any other type of processor, or a combination of different processors, such as a CPU configured to operate in conjunction with a GPU. In general, one or more processors 222 and/or 270 can be any technically feasible hardware unit capable of processing data and/or executing software applications.

Each of memories 226 and/or 272 can include, without limitation, one or more random-access memory (RAM) modules, flash memory units, any other type of memory unit, or a combination of different memory types. The one or more processors 222 and/or 270 are configured to read data from and write data to respective memories 226 and/or 272. Memories 226 and/or 272 includes various software programs that include one or more instructions that can be executed by the respective one or more processors 222 and/or 270 and application data associated with the software programs.

Each of buses 223 and/or 273 interconnect the subsystems and devices within the corresponding device 220 and/or 204. For example, bus 273 includes a local interface provided by computing device 220 that allows the database application 230 to communicate with database cache 232 and/or database storage 234 within the database system 202.

Database application 230 includes one or more software modules allowing the computing device(s) 220 in database system 202 to manage one or more databases and/or database tables stored in storage 228, such as database storage 234. Database application 230 provides support for various operations on the database(s) such as creation of new databases, executing database queries, adding and/or modifying data in the database, replicating databases and/or portions of databases, and/or the like.

Each of communications interfaces 224 and/or 274 includes any technically feasible hardware and/or software allowing respective devices 204 and/or 220 to communicate with external devices, such as storage 228, network 206, and/or the like. Each of communications interfaces 224 and/or 274 can include one or more input/output interfaces, one or more network interfaces, and/or the like.

Storage 228 includes non-volatile storage for applications and data. Storage 228 can include, without limitation, one or more fixed or removable disk drives, HDDs, SSD, NVMes, vDisks, flash memory devices, and/or other magnetic, optical, and/or solid-state storage devices.

Network 206 provides communications between client device 204, computing device(s) 220 in database system 202. Network 206 can include any technically feasible networks, such as one or more wired, wireless, or cellular networks, one or more local (e.g., an Ethernet) or wide area networks (e.g., the internet), and/or any combination thereof.

Database cache 232 represents a cache in which query results that are retrieved by the database application 230 or data from which query results are generated are cached. In the context of this disclosure, references to the caching of query results in database cache 232 can also include the caching of raw data from disk or computed data that is utilized to generate query results or otherwise serve queries. Database cache 232 utilizes a cache replacement policy that specifies how the cache is populated by the query results or the data from which the query results are generated. For example, a least recently used cache replacement policy can be utilized, which specifies that the oldest entries in database cache 232 should be replaced with data associated with newly retrieved query results. Database cache 232 allows database application 230 to generate query results from the database cache 232 rather than from database storage 234. Accordingly, database cache 232 is implemented with hardware and/or software features that facilitate faster and/or more efficient retrieval of creation of query results than the database storage 234. In some implementations, database cache 232 can be stored in memory 226. In other implementations, database cache 232 can be implemented as a table or data structure that is stored in storage 228 but that provides for faster retrieval of query results than database storage 234.

Database storage 234 includes, without limitation, one or more database tables, one or more documents in a document-based database, or a collection of key-value pairs in a key-value pair database. In one embodiment, database storage 234 can be implemented one or more storage nodes in a storage cluster that is accessible to the computing device 220.

When executed by the one or more processors 222, database application 230 executes database queries on a database implemented by the database system 202. The database queries are submitted by a database workload 275 running on a client device 204 using various mechanisms. For example, database workload 275 establishes a database connection to the database application 230 in which queries and query results are exchanged between a database workload 275 and database application 230. In one example, database queries are submitted to database application 230 over network 206 by a client device 204 using one or more network API calls supported by the database application 230. Database application 230 returns query results to database workload 275 submitting the query in response to an API call made by the database workload 275. In another example, database queries are submitted to database application 230 using a remote procedure call made by a database workload 275 running on a client device 204. Database application 230 obtains query results in response to a given database query and returns the query results to the database workload 275. In embodiments of the disclosure, database application 230 caches query results or data from which query results are generated in database cache 232 based on a caching priority that is included in query metadata associated with a query. For example, the caching priority specifies one or more priority levels associated with a query. A query associated with a higher caching priority is more likely to be cached in database cache 232 than another query associated with a lower caching priority. In one example, there are two caching priorities that are utilized by database application 230: a high caching priority and a low caching priority.

A database workload 275 submitting a query to database application 230 specifies a caching priority based on the needs of the database workload 275. A designer of a database workload 275 determines whether the database workload 275 is an end-user workload that requires lower query latency and benefits from query results or data from which query results are generated being cached more often relative to other database workloads 275. For such a database workload 275, the queries submitted to database application 230 include query metadata specifying a high caching priority. For other database workloads 275, such as analytical workloads, that do not require low query latency and/or may also submit queries very frequently or for large amounts of data, the designer of the database workload 275 can configure queries submitting by such a database workload 275 with a low caching priority.

When database application 230 receives a query, database application 230 examines query metadata accompanying the query to determine a caching priority associated with the query. The caching priority is specified by a flag, bit, or parameter associated with the query. If database application 230 receives a query with a high caching priority, database application 230 first determines whether query results associated with the query or data from which the query results are generated are stored in database cache 232. If the results of the query or data from which the query results are generated are stored in database cache 232, database application 230 returns the query results to the database workload 275 that submitted the query. Additionally, database application 230 updates the cache replacement metadata associated with the query results or data from which the query results are generated that are in database cache 232. The cache replacement metadata is utilized by database application 230 to determine which entries in database cache 232 should be replaced or deleted based upon a cache replacement policy, such a least recently used, least frequently used, and/or the like, Cache replacement metadata includes, for example, a timestamp identifying the last time an entry in database cache 232 was accessed, a counter of a number of recent accesses, and/or the like. By updating the cache replacement metadata associated with query results or data from which the query results are generated in response to a query with a high caching priority, the associated query results or data from which the query results are generated are more likely to be maintained in database cache 232. For example, assuming a least recently used cache replacement policy utilized for database cache 232, an entry in the database cache 232 with a new timestamp will be maintained in the cache over an entry in the database cache 232 with an older timestamp.

If one or more of the query results or data from which the query results are generated are not stored in database cache 232, or if a cache miss occurs, database application 230 executes the query by retrieving the one or more query results or data from which the query results are generated not stored in database cache 232 from database storage 234. Because the query is associated with a high caching priority, database application 230 caches the query results or data from which the query results are generated retrieved from database storage 234 in database cache 232 and returns the query results to the database workload 275 that submitted the query to database application 230. Database application 230 also writes cache replacement metadata associated with the query results or data from which the query results are generated stored in database cache 232 to indicate when the query results or data from which the query results are generated were queried, returned, and/or stored in database cache 232.

If database application 230 receives a query with a low caching priority, database application 230 determines whether query results or data from which the query results are generated associated with the query are stored in database cache 232. If the results or data from which the query results are generated of the query are stored in database cache 232, database application 230 returns the query results to the database workload 275 that submitted the query. Additionally, database application 230 does not update the cache replacement metadata associated with the query results or data from which the query results are generated. For example, database application 230 forgoes updating a timestamp indicating how recently the query results were accessed by a database workload 275. By not updating the cache replacement metadata, database application 230 in effect ignores the query for the purposes of determining how recently the query results were accessed by a database workload 275. For example, assuming a least recently used cache replacement policy that is utilized for database cache 232, query results or data from which the query results are generated associated with low caching priority queries are more likely to be replaced in database cache 232 in favor of query results or data from which the query results are generated for a subsequent query because the timestamp associated with the query results or data from which the query results are generated associated with the low caching priority is not updated.

If one or more of the query results or data from which the query results are generated associated with the low caching priority query are not stored in database cache 232, or if a cache miss occurs, database application 230 executes the query by retrieving the one or more query results or data from which the query results are generated not stored in database cache 232 from database storage 234. Because the query is associated with a low caching priority, database application 230 does not cache the query results or data from which the query results are generated retrieved from database storage 234 in database cache 232. Database application 230 returns the query results to database workload 275 that submitted the query to database application 230. In some implementations, database application 230 stores the query results or data from which the query results are generated in database cache 232 if there is sufficient unused space in database cache 232 that is not being utilized for query results or data from which the query results are generated associated with high caching priority queries. In other words, database application 230 can still store query results or data from which the query results are generated associated with low caching priority queries in the database cache 232 based upon a cache utilization of the database cache 232 being below a threshold, such as 15 to 75 percent.

Database workloads 275 represent applications executed by the client device 204 support the computing needs of one or more users 260. Database workloads 275 allow user(s) 260 to perform one or computing tasks to use one or more databases. For example, database workloads 275 can submit one or more queries to database application 230 that database application 230 executes by generating results associated with the query from database cache 232 and/or database storage 234. A designer of a database workload 275 determines whether a database workload 275 is an end-user workload or an analytical workload by configuring the caching priority that is submitted to database application 230 along with queries associated with the database workload 275. In some instances, a single database workload 275 can be configured to submit certain queries with a high caching priority and other queries with a low caching priority depending upon the nature of the query. For example, a database workload 275 can submit queries associated with applications or use-cases for which low query latency or caching of query results are desired. These queries can be submitted as high caching priority queries. The database workload 275 can alternatively submit other queries associated with application or use-cases for which limited or no caching of query results is desired as low caching priority queries.

In one example, an end-user workload that submits queries to database application 230 has strict or low latency requirements. The designer of the database workload 275 that is an end-user workload generally expects queries to be served as fast as possible. For example, the query can be submitted to database application 230 to serve content to a user in real-time. Additionally, end-user workloads often submit queries to the database application 230 less frequently than analytical workloads, such as whenever content is being served to an end-user. Additionally, end-user workloads generally query data corresponding to a shorter timespan, such as data that has been populated into the database or updated within the database during a recent time period.

In contrast, analytical workloads are more likely to be directed to processing or analyzing a large amount of data in the database for analytical or reporting purposes. An analytical workload is often a background process rather than a process requiring real-time query results to serve content to an end-user. As a result, analytical workloads generally have less strict or higher latency requirements. However, because analytical workloads may analyze a large amount of data, an analytical workload can submit more frequent or periodic queries for data or request data corresponding to a longer timespan relative to end-user workloads.

In either scenario, a database workload 275 sets a caching priority for a given query when the query is submitted to the database application 230. The database workload 275 sets a caching priority for a query by setting a flag, bit, or parameter in query metadata submitted along with the query to designate a high caching priority or a low caching priority.

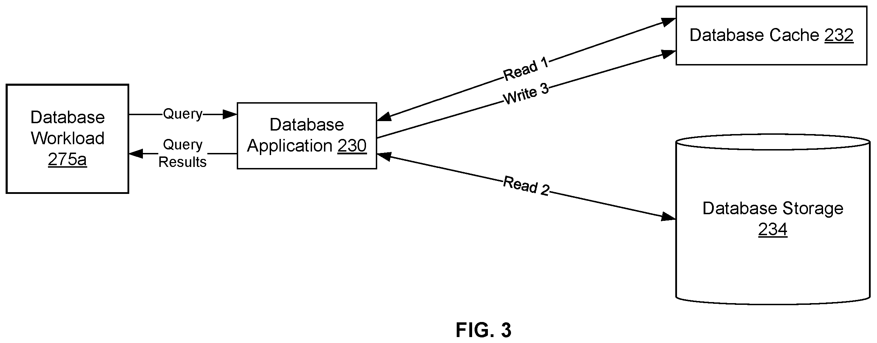

FIG. 3 is a block diagram illustrating a scenario in which an end-user workload submits a query to a database system according to one or more aspects of the present embodiments. The scenario shown in FIG. 3 assumes that one or more of the query results or data from which the query results are generated corresponding to the query are not stored in database cache 232. In FIG. 3, database workload 275a that is an end-user workload, or a workload for which caching of query results or data from which the query results are generated is desired, submits a database query to database application 230. Database application 230 executes the query by first attempting to obtain the query results or data from which the query results are generated from database cache 232 at Read 1. Database cache 232 responds to database application 230 with an indication that one or more of the query results or data from which the query results are generated are not stored in database cache 232. In other words, database application 230 determines that a cache miss has occurred.

At Read 2, database application 230 then attempts to obtain one or more of the query results or data from which the query results are generated from database storage 234. The database storage 234 replies to database application 230 with the one or more query results. As noted above, in the depicted scenario, the query is submitted by database workload 275a as a high caching priority query. At Write 3, database application 230 stores the query results or data from which the query results are generated in database cache 232. Depending upon a cache replacement policy utilized by database system 202, database application 230 overwrites entries in database cache 232. For example, assuming a least recently used cache replacement policy, database application 230 overwrites the oldest entries in database cache 232 to provide enough storage space for the query results or data from which the query results are generated. In another scenario, if there is sufficient space in database cache 232 to store the query results or data from which the query results are generated without overwriting any entries in database cache 232, database application 230 writes the query results or data from which the query results are generated to database cache 232 without deleting or overwriting any entries in database cache 232. Database application 230 can then return the query results to database workload 275a upon caching the query results or data from which the query results are generated in database cache 232.

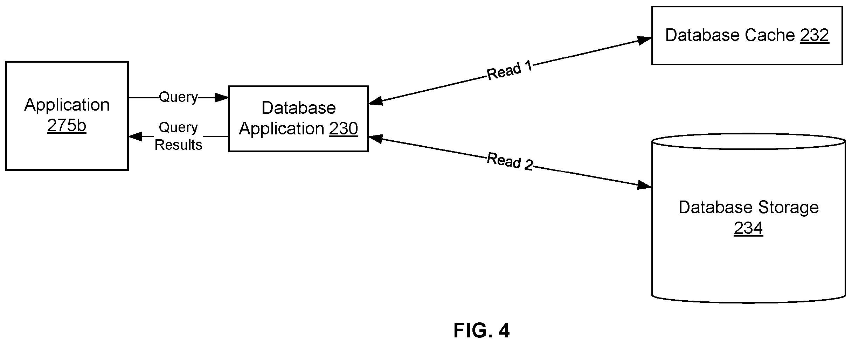

FIG. 4 is a block diagram illustrating a scenario in which an analytical workload submits a query to a database system according to one or more aspects of the present embodiments. The scenario shown in FIG. 4 also assumes that one or more of the query results or data from which the query results are generated corresponding to the query are not stored in database cache 232. In FIG. 4, database workload 275b that is an analytical, or a workload for which caching of query results or data from which the query results are generated is not desired, submits a database query to database application 230. At Read 1, database application 230 executes the query by first attempting to obtain the query results or data from which the query results are generated from database cache 232. Database cache 232 responds to database application 230 with an indication that one or more of the query results or data from which the query results are generated are not stored in database cache 232. In other words, database application 230 determines that a cache miss has occurred.

Second, at Read 2, database application 230 then attempts to obtain one or more of the query results or data from which the query results are generated from database storage 234. The database storage 234 replies to database application 230 with the one or more query results or data from which the query results are generated. As noted above, in the depicted scenario, the query is submitted by database workload 275b as a low caching priority query. Therefore, database application 230 does not cache the query results or data from which the query results are generated in database cache 232. Database application 230 can then return the query results to the database workload 275b without caching the query results or data from which the query results are generated in database cache 232.

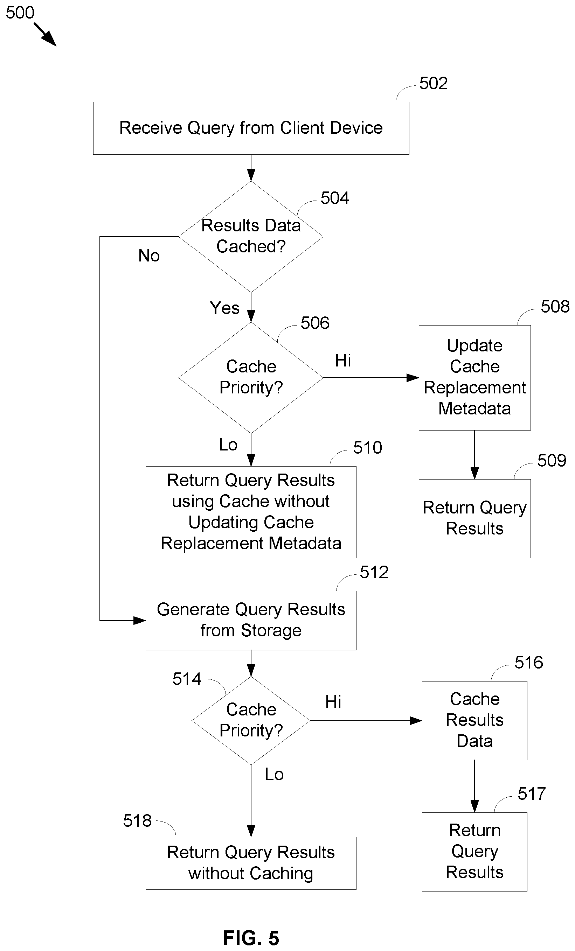

FIG. 5 is a flowchart of method steps for executing a query submitted by a database workload 275 to database application 230, according to some embodiments. Although the method steps are described in conjunction with FIGs. 1A-4, persons skilled in the art will understand that any system configured to perform the method steps, in any order, falls within the scope of the present invention. The method 500 of FIG. 5 can be implemented by database application 230. In the discussion of FIG. 5, a non-limiting illustrative discussion is presented with respect to database system 202 and database application 230 performing the steps of the method.

As shown in FIG. 5, the method 500 begins at step 502, where database application 230 receives a query from client device 204. The query can be generated and submitted to database application 230 by a database workload 275. As noted above, a database workload 275 can be configured by a designer of the database workload 275 as an end-user workload, or a workload for which caching of query results or data from which the query results are generated is desired. The database workload 275 can also be configured as an analytical workload, or a workload for which caching of query results or data from which the query results are generated is not desired.

At step 504, database application 230 determines whether the query results or data from which the query results are generated are stored in database cache 232. If the data needed to serve the query is stored in database cache 232, the method 500 proceeds to step 506. If the query results or data from which the query results are generated are not stored in database cache 232, the method 500 proceeds to step 512.

At step 506, database application 230 determines a caching priority associated with the query received at step 502. As noted above, the caching priority is submitted along with a query to database application 230 as a flag, bit, or parameter. The caching priority can be included in query metadata that is submitted along with the query to database application 230. If the caching priority is a high caching priority, the method 500 proceeds to step 508. If the caching priority is a low caching priority, the method 500 proceeds to step 510.

At step 508, database application 230 updates the cache replacement metadata associated with the query results or data from which the query results are generated in database cache 232. The cache replacement metadata, for example, is a timestamp associated with the query results or data from which the query results are generated stored in database cache 232 that indicates the last time the query results or data from which the query results are generated were retrieved from or stored in database cache 232. At step 509, database application 230 returns the query results to database workload 275.

At step 510, database application 230 returns the query results to the database workload 275 without updating the cache replacement metadata associated with the query results or data from which the query results are generated in database cache 232. Because the method 500 proceeded from step 506 after a determination that the query has a low caching priority, database application 230 does not update the cache replacement metadata associated with the query results or data from which the query results are generated so that database application 230 is more likely to replace the query results or data from which the query results are generated in database cache 232 than query results or data from which the query results are generated associated with high caching priority queries.

At step 512, database application 230 generates query results associated with the query from database storage 234 because the method 500 proceeded to step 512 upon determining at step 504 that the query results or data from which the query results are generated are not stored in database cache 232. The method 500 proceeds to 512 because a cache miss has occurred.

At step 514, database application 230 determines a caching priority associated with the query received at step 502. If the caching priority is a high caching priority, the method 500 proceeds to step 516. If the caching priority is a low caching priority, the method 500 proceeds to step 518.

At step 516, the method 500 caches the query results or data from which the query results are generated retrieved at step 512 in database cache 232. Because the query is associated with a high caching priority, the query results or data from which the query results are generated are cached. Database application 230 caches the query results or data from which the query results are generated according to a cache replacement policy utilized by the database system 202. At step 517, database application 230 returns the query results to the database workload 275. At step 518, if the caching priority associated with the query is a low caching priority, database application 230 returns the query results to the database workload 275 without caching the query results or data from which the query results are generated in the database cache 232.

It should be appreciated by one of ordinary skill in the art that the method 500 can be repeated for each new query that is received by the database application 230 from a 275. Additionally, method 500 can also be performed multiple times in parallel if the database application 230 receives multiple concurrent queries from one or more database workloads 275.

As discussed above and further emphasized here, Figure 5 is merely an example which should not unduly limit the scope of the claims. One of ordinary skill in the art would recognize many variations, alternatives, and modifications. In some embodiments, instead of returning the query results without caching during step 518, database application 230 performs an additional test to determine whether a utilization of the database cache 232 is below a threshold. If the utilization of the database cache 232 is below a threshold, the method 500 can proceed to step 516 where query results or data from which the query results are generated are cached. As another example, if the utilization of the database cache 232 exceeds the threshold, the query results are returned to the database workload 275 without caching the query results or data from which the query results are generated in the database cache 232.

In sum, the disclosed techniques enable caching data in a database system by receiving a request to access a database, determining a caching priority specified in the request, processing the request to generate query results; and after generating the query results, caching or not caching the query results or data from which the query results are generated based on the determined caching priority.

At least one technical advantage of the disclosed techniques relative to the prior art is that, with the disclosed techniques, the likelihood that end-user workloads receive the benefits of database caching is increased because of reduced cache pollution due to analytical workloads. By reducing cache pollution, database performance is improved because of reduced background cache cleanup processing and unnecessary cache additions, which results in better latencies and less CPU consumption. Additionally, the disclosed techniques result in an improved cache hit ratio for end-user workloads, which results in lower latency for end-user workloads and fewer wasted processing resources allocated to resolving cache misses. Furthermore, by allowing analytical workloads to operate on the same copy of the database as end-user workloads, analytical workloads are permitted to operate on the database of record rather than a potentially inaccurate replicated database. These technical advantages provide one or more technological improvements over prior art approaches.
1. In some embodiments, one or more non-transitory computer-readable media store program instructions that, when executed by one or more processors associated with a first computing device, cause the one or more processors to perform a method comprising receiving a request to access a database, determining a caching priority specified in the request, processing the request to generate query results, and after generating the query results, cache or not cache data from which the query results are generated based on the determined caching priority.
2. The one or more non-transitory computer-readable media of clause 1, wherein the database is a structured query language (SQL) database or a NoSQL database.
3. The one or more non-transitory computer-readable media of clauses 1 or 2, wherein the caching priority is determined based on a flag or a bit in the request.
4. The one or more non-transitory computer-readable media of any of clauses 1-3, wherein the caching priority is determined based on a parameter in the request.
5. The one or more non-transitory computer-readable media of any of clauses 1-4, wherein the caching priority specifies to cache the data from which the query results are generated when the caching priority is a high caching priority.
6. The one or more non-transitory computer-readable media of any of clauses 1-5, wherein the caching priority is set by a workload making the request.
7. The one or more non-transitory computer-readable media of any of clauses 1-6, wherein the caching priority is set to cache the data from which the query results are generated when the workload is an end-user workload.
8. The one or more non-transitory computer-readable media of any of clauses 1-7, wherein the caching priority specifies to not cache the data from which the query results are generated when the workload is an analytical workload.
9. The one or more non-transitory computer-readable media of any of clauses 1-8, wherein when the caching priority indicates that caching the query results has a low caching priority, further determining whether to cache or not cache the data from which the query results are generated based on a cache utilization.
10.The one or more non-transitory computer-readable media of any of clauses 1-9, wherein in response to determining (1) that the data from which the query results of the request are generated are stored in a cache and (2) that the caching priority indicates that caching should not occur, not updating cache replacement metadata for the data from which the query results are generated stored in the cache.
11.The one or more non-transitory computer-readable media of any of clauses 1-10, wherein the method further comprises in response to determining that the data from which the query results of the request are generated are stored in a cache, returning the query results of the request based on the data in the cache, and in response to determining that the data from which query results of the request are generated are not stored in the cache determining the query results by querying the database, and in response to determining that the caching priority indicates that caching should occur, storing the data from which the query results of the request are generated in the cache.
12. In some embodiments, a computer-implemented method comprises receiving a request to access a database, determining a caching priority specified in the request, processing the request to generate query results, and after generating the query results, cache or not cache data from which the query results are generated based on the determined caching priority.
13.The computer-implemented method of clause 12, wherein the database is a structured query language (SQL) database or a NoSQL database.
14.The computer-implemented method of clauses 12 or 13, wherein the caching priority is determined based on a flag or a bit in the request.
15.The computer-implemented method of any of clauses 12-14, wherein the caching priority is determined based on a parameter in the request.
16.The computer-implemented method of any of clauses 12-15, wherein the caching priority specifies to cache the data from which the query results are generated when the caching priority is a high caching priority.
17.The computer-implemented method of any of clauses 12-16, wherein the caching priority is set by a workload making the request.
18.The computer-implemented method of any of clauses 12-17, wherein the caching priority is set to cache the data from which the query results are generated when the workload is an end-user workload.
19.The computer-implemented method of any of clauses 12-18, wherein the caching priority specifies to not cache the data from which the query results are generated when the workload is an analytical workload.
20.The computer-implemented method of any of clauses 12-19, wherein when the caching priority indicates that caching the data from which the query results are generated has a low caching priority, further determining whether to cache or not cache the data from which the query results are generated based on a cache utilization.
21.The computer-implemented method of any of clauses 12-20, wherein in response to determining (1) that the data from which the query results of the request are generated are stored in a cache and (2) that the caching priority indicates that caching should not occur, not updating cache replacement metadata for the data from which the query results are generated stored in the cache.
22.The computer-implemented method of any of clauses 12-21, further comprising in response to determining that the data from which the query results of the request are generated are stored in a cache, returning the query results of the request based on the data in the cache, and in response to determining that the data from which query results of the request are generated are not stored in the cache determining the query results by querying the database, and in response to determining that the caching priority indicates that caching should occur, storing the data from which the query results of the request are generated in the cache.
23. In some embodiments, a system comprises memory storing instructions, and one or more processors coupled to the memory and, when executing the instructions, are configured to perform operations comprising receiving a request to access a database, determining a caching priority specified in the request, processing the request to generate query results, and after generating the query results, cache or not cache data from which the query results are generated based on the determined caching priority.
24.The system of clause 23, wherein the database is a structured query language (SQL) database or a NoSQL database.
25.The system of clauses 23 or 24, wherein the caching priority is determined based on a flag or a bit in the request.
26.The system of any of clauses 23-25, wherein the caching priority is determined based on a parameter in the request.
27.The system of any of clauses 23-26, wherein the caching priority specifies to cache the data from which the query results are generated when the caching priority is a high caching priority.
28.The system of any of clauses 23-27, wherein the caching priority is set by a workload making the request.
29.The system of any of clauses 23-28, wherein the caching priority is set to cache the data from which the query results are generated when the workload is an end-user workload.
30.The system of any of clauses 23-29, wherein the caching priority specifies to not cache the data from which the query results are generated when the workload is an analytical workload.
31.The system of any of clauses 23-30, wherein when the caching priority indicates that caching the data from which the query results are generated has a low caching priority, further determining whether to cache or not cache the data from which the query results are generated based on a cache utilization.
32.The system of any of clauses 23-31, wherein in response to determining (1) that the data from which the query results of the request are generated are stored in a cache and (2) that the caching priority indicates that caching should not occur, not updating cache replacement metadata for the data from which the query results are generated stored in the cache.
33.The system of any of clauses 23-32, wherein the operations further comprise in response to determining that the data from which the query results of the request are generated are stored in a cache, returning the query results of the request based on the data in the cache, and in response to determining that the data from which query results of the request are generated are not stored in the cache determining the query results by querying the database, and in response to determining that the caching priority indicates that caching should occur, storing the data from which the query results of the request are generated in the cache.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. One or more computer program products comprising computer program instructions that, when executed by one or more processors associated with a first computing device, cause the one or more processors to perform a method comprising:
receiving a request to access a database;
determining a caching priority specified in the request;
processing the request to generate query results; and
after generating the query results, cache or not cache data from which the query results are generated based on the determined caching priority.

2. The one or more computer program products of claim 1, wherein the database is a structured query language (SQL) database or a NoSQL database.

3. The one or more computer program products of claim 1 or 2, wherein the caching priority is determined based on a flag or a bit in the request.

4. The one or more computer program products of claim 1 or 2, wherein the caching priority is determined based on a parameter in the request.

5. The one or more computer program products of any one of claims 1 to 4, wherein the caching priority specifies to cache the data from which the query results are generated when the caching priority is a high caching priority.

6. The one or more computer program products of any one of claims 1 to 5, wherein the caching priority is set by a workload making the request.

7. The one or more computer program products of claim 6, wherein the caching priority is set to cache the data from which the query results are generated when the workload is an end-user workload.

8. The one or more computer program products of claim 6, wherein the caching priority specifies to not cache the data from which the query results are generated when the workload is an analytical workload.

9. The one or more computer program products of any one of claims 1 to 8, wherein when the caching priority indicates that caching the query results has a low caching priority, further determining whether to cache or not cache the data from which the query results are generated based on a cache utilization.

10. The one or more computer program products of any one of claims 1 to 9, wherein in response to determining (1) that the data from which the query results of the request are generated are stored in a cache and (2) that the caching priority indicates that caching should not occur, not updating cache replacement metadata for the data from which the query results are generated stored in the cache.

11. The one or more computer program products of any one of claims 1 to 9, wherein the method further comprises:
in response to determining that the data from which the query results of the request are generated are stored in a cache, returning the query results of the request based on the data in the cache; and
in response to determining that the data from which query results of the request are generated are not stored in the cache:
determining the query results by querying the database; and
in response to determining that the caching priority indicates that caching should occur, storing the data from which the query results of the request are generated in the cache.

12. A computer-implemented method comprising:
receiving a request to access a database;
determining a caching priority specified in the request;
processing the request to generate query results; and
after generating the query results, cache or not cache data from which the query results are generated based on the determined caching priority.

13. The computer-implemented method of claim 12, wherein the caching priority is determined based on a flag, a bit, or a parameter in the request.

14. The computer-implemented method of claim 12 or 13, wherein when the caching priority indicates that caching the data from which the query results are generated has a low caching priority, further determining whether to cache or not cache the data from which the query results are generated based on a cache utilization.

15. A system comprising:
memory storing instructions; and
one or more processors coupled to the memory and, when executing the instructions, are configured to perform the method of any one of claims 12 to 14.
